# EUROPÄISCHE PATENTSCHRIFT

(11) **EP 4 377 646 B1**
(45) Veröffentlichungstag und Bekanntmachung des Hinweises auf die Patenterteilung: **26.03.2025**
(21) Anmeldenummer: 22738663.8
(22) Anmeldetag: 04.07.2022
(51) Int. Cl.: G01K 13/02, G01K 1/08, G01K 15/00, G01M 3/16

(54) **DIAGNOSE EINES THERMOMETERS**
DIAGNOSIS OF A THERMOMETER
DIAGNOSTIC D'UN THERMOMÈTRE

(30) Priorität: 29.07.2021 DE 102021119770
(43) Veröffentlichungstag der Anmeldung: 05.06.2024
(73) Patentinhaber: Endress+Hauser Wetzer GmbH+Co. KG, 87484 Nesselwang (DE)
(72) Erfinder: SAECKER, Dietmar, 87484 Nesselwang (DE)
(74) Vertreter: Endress + Hauser Group Services (Deutschland) AG+Co. KG
(86) Internationale Anmeldenummer: PCT/EP2022/068451
(87) Internationale Veröffentlichungsnummer: WO 2023/006347

(56) Entgegenhaltungen:
- EP-A1- 0 441 659
- EP-B1- 2 176 724
- EP-B1- 3 118 583
- DE-A1- 102019 126 516
- DE-A1- 102019 128 621
- DE-A1- 19 747 273
- DE-B3- 102004 032 561
- US-B1- 10 466 137

## Beschreibung

Die vorliegende Erfindung betrifft eine Vorrichtung zur Bestimmung und/oder Überwachung der Temperatur eines, insbesondere elektrisch leitfähigen Medium in einem Behältnis mit einer Diagnosefunktion.

Thermometer sind in unterschiedlichsten Ausgestaltungen aus dem Stand der Technik bekannt geworden. So gibt es Thermometer, welche zur Messung der Temperatur die Ausdehnung einer Flüssigkeit, eines Gases oder eines Festkörpers mit bekanntem Ausdehnungskoeffizienten heranziehen, oder auch solche, welche die elektrische Leitfähigkeit eines Materials oder eine davon abgeleitete Größe mit der Temperatur in Zusammenhang bringen, wie beispielsweise den elektrischen Widerstand bei Verwendung von Widerstandselementen oder den thermoelektrischen Effekt im Falle von Thermoelementen. Dagegen wird bei Strahlungsthermometern, insb. Pyrometern, zur Bestimmung der Temperatur einer Substanz deren Wärmestrahlung ausgenutzt. Die jeweils zugrundeliegenden Messprinzipien sind jeweils in einer Vielzahl von Veröffentlichungen beschrieben worden.

Bei einem Temperatursensor in Form eines Widerstandselements sind unter anderem sogenannte Dünnschicht- und Dickschicht-Sensoren sowie sogenannte Heißleiter (auch als NTC-Thermistoren bezeichnet) bekannt geworden. Bei einem Dünnschicht-Sensor, insbesondere einem Resistance Temperature Detector (RTD), kommt beispielsweise ein mit Anschlussdrähten versehenes und auf ein Trägersubstrat aufgebrachtes Sensorelement zum Einsatz, wobei die Rückseite des Trägersubstrats in der Regel metallisch beschichtet ist. Als Sensorelemente werden sogenannte Widerstandselemente, welche beispielsweise durch Platinelemente gegeben sind, verwendet, die unter anderem unter den Bezeichnungen PT10, PT100, und PT1000 auch kommerziell erhältlich sind.

Bei Temperatursensoren in Form von Thermoelementen wiederum wird die Temperatur durch eine Thermospannung bestimmt, die zwischen den einseitig angeschlossenen Thermodrähten aus unterschiedlichen Materialien entsteht. Zur Temperaturmessung werden üblicherweise Thermoelemente nach DIN-Norm IEC584, z.B. Thermoelemente vom Typ K, J, N, S, R, B, T oder E, als Temperaturfühler eingesetzt. Aber auch andere Materialpaare, insbesondere solche mit einem messbaren Seebeck-Effekt, sind möglich.

Die Temperatursensoren sind häufig Teil eines Messeinsatzes, welcher beispielsweise in einen in das Medium eintauchenden Eintauchkörper, bzw. ein Schutzrohr, einbringbar ist. Das Schutzrohr erfüllt dann im Prinzip die Funktion eines Gehäuses, das den Messeinsatz vor der Prozessumgebung, z.B. aggressiven Medien, Kräften und/oder hohen Drücken und/oder Temperaturen im jeweiligen Prozess, schützt. Die Schutzrohre wiederum werden typischerweise in einen Rohrstutzen eines Behältnisses oder eines Messrohrs eingebracht.

Insbesondere für sicherheitskritische Applikationen ist eine Diagnose der jeweils verwendeten Messvorrichtung von größter Bedeutung. Beispielsweise müssen Sicherheitsvorkehrungen getroffen werden, die eine Abdichtung zwischen dem Prozess und einer Prozessumgebung sicherstellen. Falls beispielsweise Medium aus dem Prozess in ein Innenvolumen des Schutzrohrs eintritt, gilt es sicherzustellen, dass dieses Medium nicht in einen Bereich, in welchem eine Elektronik des jeweiligen Sensors angeordnet ist und/oder an die Umgebung gelangen kann.

In diesem Zusammenhang ist beispielsweise aus EP 2343514 A1 eine Einbaugruppe für einen stabförmigen Messeinsatz bekannt geworden, bei welcher zwei miteinander verbindbare Gehäuseteile mit jeweils einer Sicherheitskammer bereitgestellt werden. Zudem ist eine Dichtungsvorrichtung vorgesehen, die dazu dient, bei in ein Montagegehäuse eingeführtem Messeinsatz die zweite Sicherheitskammer gegenüber der ersten Sicherheitskammer insbesondere druck- und/oder flüssigkeitsdicht abzuschließen.

In der DE102011088736A1 wiederum ist eine Dichtungsvorrichtung zur Aufnahme eines Messeinsatzes beschrieben, welche einen Kolben, eine Buchse und mindestens ein Dichtelement umfasst, wobei der Kolben und die Buchse zur Aufnahme des Messeinsatzes durch eine im Kolben und in der Buchse vorgesehene Bohrung dienen. Dabei ist der der Kolben zusätzlich mit der Buchse derart wechselwirkend verbunden, dass ein vom Kolben auf die Buchse übertragener Druck dazu dient, das Dichtelement zu verformen und dadurch eine Dichtwirkung zu erzielen, um bei eingeführtem Messeinsatz die Bohrung, insbesondere flüssigkeits- oder gasdicht, abzudichten. Um zusätzlich eine Benachrichtigung über einen tatsächlichen Dichtungsvorgang zu ermöglichen, ist aus der EP03118583B2 bekannt geworden, zusätzlich eine Fehlererkennungseinheit zu verwenden, welche ein Sensorelement zur Detektion eines Fehlerzustands der Dichtungsvorrichtung umfasst.

All diese Dichtungsvorrichtungen ermöglichen das Erkennen einer Leckage, bevor ggf. aggressive oder toxische Medien aus dem Prozess austreten können. Die vorgeschlagenen Dichtmechanismen beruhen jedoch auf Druckunterschieden über einen vorgebbaren Grenzwert hinaus. Jedoch ist eine Leckage in einem Schutzrohr nicht immer mit einem derartigen Druckunterschied verbunden. Es wäre somit wünschenswert, Beschädigungen an einem Schutzrohr unabhängig von den jeweiligen Druckunterschieden detektieren bzw. erkennen zu können.

Deshalb liegt der vorliegenden Erfindung die Aufgabe zugrunde, eine universelle Möglichkeit zur Diagnose von Schutzrohren von Thermometern bereitzustellen.

Erfindungsgemäß wird diese Aufgabe gelöst durch eine Vorrichtung zur Bestimmung und/oder Überwachung einer Temperatur eines, insbesondere elektrisch leitfähigen, Mediums in einem Behältnis umfassend einen Messeinsatz in welchem zumindest ein Temperatursensor angeordnet ist, und ein Schutzrohr, welches mit dem Medium in Kontakt kommt und zur Aufnahme des Messeinsatzes dient. Erfindungsgemäß umfasst die Vorrichtung zudem eine Diagnose-Einheit, welche Diagnose-Einheit zumindest eine erste Elektrode aus einem ersten Material aufweist, welche erste Elektrode sich zumindest teilweise in einem Innenvolumen der Vorrichtung befindet. Erfindungsgemäß ist die erste Elektrode Teil einer galvanischen Zelle. Diese wird gebildet zusammen mit einer zweiten Elektrode oder einer weiteren Komponente der Vorrichtung, beispielsweise einer Wandung, welche ein Innenvolumen der Vorrichtung abschließt oder einer Komponente, welche in ein Innenvolumen der Vorrichtung hineinreicht. Im Falle, dass Medium in die Vorrichtung eintritt, aufgrund einer Beschädigung des Schutzrohrs, kommt es zu einer Spannung an der galvanischen Zelle, also zwischen der ersten Elektrode und der zweiten Elektrode oder der weiteren Komponente der Vorrichtung. Das Vorhandensein einer Spannung an der galvanischen Zelle dient also zur Diagnose der Vorrichtung hinsichtlich einer Beschädigung des Schutzrohrs.

Beispielsweise kann eine Elektronik der Vorrichtung dazu ausgestaltet sein, im Falle einer Detektion einer an der galvanischen Zelle anliegenden Spannung, ein Diagnose-Signal auszugeben, dass das Eintreten von Medium in die Vorrichtung signalisiert.

In einer Ausgestaltung umfasst die Vorrichtung ein Halsrohr zur Verbindung mit dem Schutzrohr. Das Halsrohr dient der Verbindung einer Elektronik mit dem Messeinsatz. Ggf. umfasst die Vorrichtung zudem ein Anschlusselement zur Verbindung mit der Elektronik oder einem Prozessanschluss an dem jeweiligen Behältnis.

In einer weiteren Ausgestaltung ist die Diagnose-Einheit, insbesondere die erste Elektrode, zumindest teilweise in einem Innenvolumen des Schutzrohrs anordenbar oder angeordnet. Die Diagnose-Einheit kann entweder als fester Bestandteil der Vorrichtung fest in das Schutzrohr oder den Messeinsatz integriert sein, oder auch derart ausgestaltet sein, dass sie lösbar in das Schutzrohr einbringbar ist.

In diesem Zusammenhang ist es von Vorteil, wenn die Diagnose-Einheit, insbesondere die erste Elektrode, in einem dem Medium im eingebauten Zustand der Vorrichtung zugewandten Endbereich des Schutzrohrs anordenbar ist oder angeordnet ist. Die Diagnose-Einheit ist in diesem Falle in einem Bereich angeordnet, in welchem auch der Temperatursensor angeordnet ist.

In einer weiteren Ausgestaltung ist die Diagnose-Einheit, insbesondere die erste Elektrode, zumindest teilweise in einem Innenvolumen des Halsrohrs anordenbar oder angeordnet.

Es versteht sich jedoch von selbst, dass auch andere Positionen der Diagnose-Einheit relativ zur Vorrichtung, bzw. relativ zu einem Innenvolumen der Vorrichtung, möglich sind und ebenfalls unter die vorliegende Erfindung fallen. Auch ist es denkbar, mehrere Diagnose-Einheiten an unterschiedlichen Positionen innerhalb oder an der Vorrichtung anzuordnen.

Noch eine Ausgestaltung der erfindungsgemäßen Vorrichtung beinhaltet, dass die Diagnose-Einheit, insbesondere zumindest die erste Elektrode, von einem elektrisch-nichtleitenden, wasserlöslichen Schutzelement, umgeben ist. Auf diese Weise kann verhindert werden, dass eine Spannung an der galvanischen Zelle durch eine Kondensation innerhalb der Vorrichtung erzeugt wird und zu einer fehlerhaften Diagnose führt. Im Falle von eintretendem Medium wird das Schutzelement aufgelöst, und es entsteht eine Spannung an der galvanischen Zelle. Das Schutzelement kann beispielsweise aus einem Zucker hergestellt sein.

In einer Ausgestaltung umfasst die Vorrichtung eine modulare Dichtungsvorrichtung für eine Installationsbaugruppe zur Aufnahme des Messeinsatzes. Bei der modularen Dichtungsvorrichtung kann es sich insbesondere um eine Dichtungsvorrichtung gemäß der EP03118583B2, DE102011088736A1 oder EP 2343514 A1 handeln. Auf alle diese Druckschriften wird im Rahmen der vorliegenden Anmeldung vollumfänglich Bezug genommen. Die Diagnose-Einheit kann insbesondere das in EP03118583B2 beschriebene Messelement sein.

Gemäß einer Alternative der beanspruchten Erfindung unterscheidet sich das erste Material von einem Material des Schutzrohrs oder des Halsrohrs, insbesondere bezüglich seiner elektrochemischen Eigenschaften. Dies ist insbesondere von Vorteil, wenn die galvanische Zelle aus der ersten Elektrode und einer Wandung des Schutzrohrs oder Halsrohrs gebildet ist.

Gemäß einer Alternative der beanspruchten Erfindung umfasst die Diagnose-Einheit zumindest die erste und eine zweite Elektrode, wobei sich das erste Material für die erste Elektrode und ein zweites Material für die zweite Elektrode voneinander, insbesondere bezüglich ihrer elektrochemischen Eigenschaften, unterscheiden. In diesem Falle umfasst die galvanische Zelle, bzw. die Diagnose-Einheit zwei Elektroden, zwischen welchen im Falle von eintretendem Medium eine elektrische Spannung anliegt.

Erfindungsgemäß umfasst die Vorrichtung ein Befestigungsmittel zum, insbesondere lösbaren, Befestigen der Diagnose-Einheit. Die Diagnose-Einheit kann einerseits innerhalb des Schutzrohrs oder Halsrohrs befestigbar sein und sich komplett in einem Innenvolumen der Vorrichtung befinden. In anderen Ausgestaltungen können die Diagnose-Einheit und weitere Komponenten der Vorrichtung aber auch derart ausgestaltet sein, dass die Diagnose-Einheit von außen, beispielsweise über eine Öffnung in einer Komponente der Vorrichtung, beispielsweise im Halsrohr, in die Vorrichtung einbringbar und mittels der Befestigungsmittel an der Vorrichtung befestigbar ist.

In diesem Zusammenhang ist es von Vorteil, wenn es sich bei dem Befestigungsmittel um ein Mittel zur Herstellung einer Schraubverbindung, einer Klemmverbindung oder Schweißverbindung handelt.

Noch eine Ausgestaltung der Vorrichtung beinhaltet, dass die Diagnose-Einheit ein Gehäuse umfasst, in welches die erste Elektrode oder die erste Elektrode und zweite Elektrode zumindest teilweise angeordnet ist/sind, wobei die erste Elektrode oder die erste Elektrode und zweite Elektrode zumindest teilweise aus dem Gehäuse herausragt/herausragen.

In diesem Fall ist es von Vorteil, wenn das Gehäuse ein zu dem Befestigungsmittel der Vorrichtung komplementäres Befestigungsmittel umfasst.

Es ist ebenfalls von Vorteil, wenn das Gehäuse der Diagnose-Einheit zumindest teilweise mit einer Füllung, insbesondere einer Vergussmasse, gefüllt ist, in welche die erste Elektrode oder die erste Elektrode und zweite Elektrode zumindest teilweise eingebracht ist/sind.

Die Erfindung wird anhand der nachfolgenden Figuren näher erläutert. Es zeigt:
Fig. 1 eine schematische Darstellung eines Thermometers gemäß Stand der Technik,
Fig. 2 bevorzugte Ausgestaltungen für eine erfindungsgemäße Vorrichtung mit einer Diagnose-Einheit, und
Fig. 3 eine beispielhafte Ausgestaltung für eine Diagnose-Einheit zur lösbaren Befestigung an einer Komponente des Thermometers.

In den Figuren sind gleiche Elemente mit gleichem Bezugszeichen versehen. Die Ausgestaltungen aus den verschiedenen Figuren sind ferner beliebig miteinander kombinierbar.

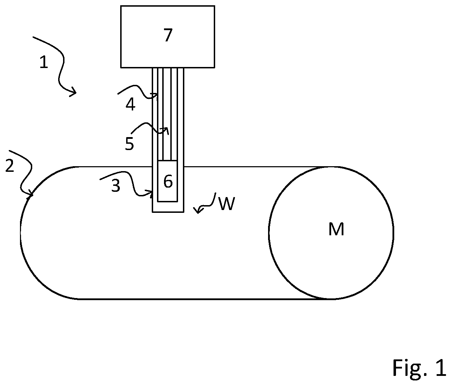

In Fig.1 ist eine schematische Abbildung eines Thermometers 1 gemäß Stand der Technik zur Erfassung der Temperatur T eines Mediums M in einem Behältnis 2 in Form einer Rohrleitung gezeigt. Das Thermometer weist ein Schutzrohr 3 auf, welches in das Medium M eintaucht, und welches beispielsweise über einen in Fig. 1 nicht dargestellten Prozessanschluss 2a in das Behältnis 2 einbringbar ist.

Das Thermometer 1 umfasst ferner einen Messeinsatz 4 und eine Elektronik 7. Der Messeinsatz wiederum umfasst einen Temperatursensor 6, welcher im vorliegenden Fall durch ein temperatursensitives Element in Form eines Widerstandselements gegeben ist. Der Temperatursensor 6 ist über die Anschlussleitungen 5 elektrisch kontaktiert und mit der Elektronik 7 verbunden. Während das in Fig. 1 gezeigte Thermometer 1 in kompakter Bauweise mit integrierter Elektronik 7 ausgeführt ist, kann bei anderen Thermometern 1 die Elektronik 7 auch separat von dem Messeinsatz 4 angeordnet sein. Auch muss es sich bei dem Temperatursensor 6 nicht notwendigerweise um ein Widerstandselement handeln und die Anzahl der verwendeten Anschlussleitungen 5 muss nicht notwendigerweise zwei betragen. Vielmehr kann die Anzahl der Anschlussleitungen 5 je nach angewendetem Messprinzip und verwendetem Temperatursensor 6 passend gewählt werden.

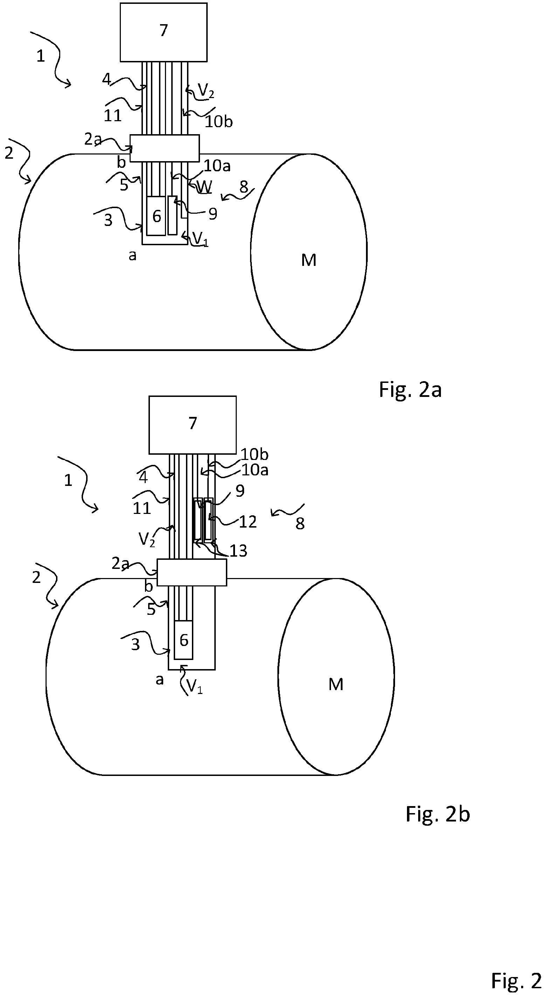

Beispielsweise im Falle von sicherheitskritischen Anwendungen, beispielsweise bei Verwendung mit aggressiven und/oder toxischen Medien, ist es von großer Bedeutung, Beschädigungen an dem Schutzrohr 3 frühzeitig zu erkennen, um zu verhindern, dass Medium M aus dem Prozess, bzw. aus dem Behältnis 2 austreten kann. Um eine frühzeitige, genaue und universelle Diagnose zu ermöglichen, kommt erfindungsgemäß eine Diagnose-Einheit 8 zum Einsatz. Verschiedene bevorzugte Ausgestaltungen eines Thermometers 1 mit einer solchen Diagnose-Einheit 8 sind Gegenstand von Fig. 2.

In Fig. 2a ist beispielhaft eine erste Ausgestaltung für eine erfindungsgemäße Vorrichtung 1 dargestellt. Die Diagnose-Einheit 8 umfasst eine erste Elektrode 9 aus einem ersten Material, welche über die Anschlussleitung 10a kontaktiert ist, und eine Anschlussleitung 10b, welche mit der Wandung W des Schutzrohrs 3 verbunden ist. In diesem Falle unterscheidet sich das erste Material von einem Material des Schutzrohrs 3, insbesondere bezüglich seiner elektrochemischen Eigenschaften.

Für die in Fig. 2a dargestellte Ausgestaltung bilden die erste Elektrode 9 und die Wandung W des Schutzrohrs 3 eine galvanische Zelle in einem Innenvolumen V₁ des Schutzrohrs. Im Falle, dass Medium M in das Schutzrohr eintritt, kommt es zu einer Spannung zwischen den Anschlussleitungen 10a und 10b. Wird eine derartige Spannung in der Elektronik 7 detektiert, kann beispielsweise ein entsprechendes Diagnose-Signal ausgegeben werden.

Die Diagnose-Einheit 8 ist hier in einem dem Medium M zugewandten Endbereich a des Schutzrohrs 3 angeordnet, in welchem sich ebenfalls der Temperatursensor 6 befindet. In anderen Ausgestaltungen kann die Diagnose-Einheit auch in einem dem Medium M abgewandten Bereich b des Schutzrohrs 3, oder in einem Innenvolumen V₂ des Halsrohrs 11 angeordnet sein.

Die erste Elektrode 9 ist für die Ausgestaltung gemäß Fig. 2a in Form einer separaten Komponente in das Schutzrohr 3 eingebracht. In anderen Ausgestaltungen kann die erste Elektrode 9 beispielsweise auch auf oder an den Messeinsatz 4 oder eine andere Komponente der Vorrichtung 1, welche in das Innenvolumen V hineinragt, befestigt sein. Schließlich können auch mehrere Diagnose-Einheiten 8 bzw. mehrere galvanische Zellen an unterschiedlichen Positionen innerhalb der Vorrichtung 1 bereitgestellt werden.

Bei der Ausgestaltung gemäß Fig. 2b umfasst die Diagnose-Einheit 8 eine erste 9 und eine zweite Elektrode 12, welche aus, insbesondere hinsichtlich ihrer elektrochemischen Eigenschaften, unterschiedlichen Materialien bestehen. Beide Elektroden 9,12 sind als separate Komponenten in das Innenvolumen V₂ des Halsrohrs 11 eingebracht und jeweils über eine Anschlussleitungen 10a, 10b mit der Elektronik 7 kontaktiert. Beide Elektroden 9,12 sind zudem von einem Schutzelement 13 umgeben, welches verhindert, dass im Falle einer Kondensation im Innenvolumen V2 des Halsrohrs eine Spannung an der aus den beiden Elektroden 9,12 gebildeten galvanischen Zelle auftritt.

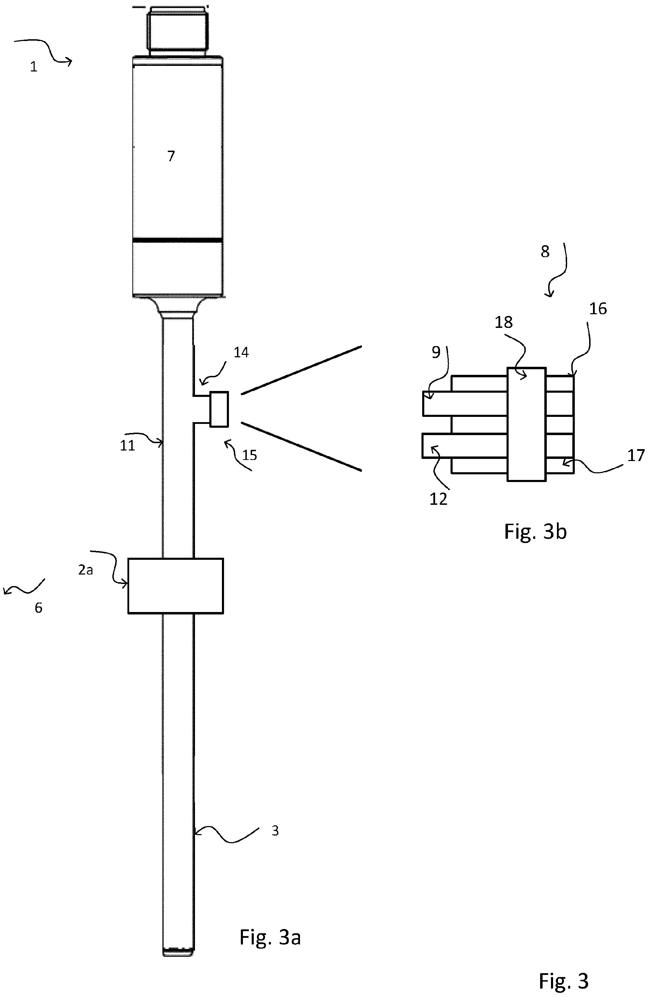

Eine weitere Ausgestaltung für eine erfindungsgemäße Diagnose-Einheit 8 ist in Fig. 3 dargestellt. Fig. 3a zeigt ein Thermometer 1 mit einem Schutzrohr 3 und einem Halsrohr 11. Das Halsrohr 11 verfügt über einen Anschluss 14 mit einem Befestigungsmittel 15, in welches die Diagnose-Einheit 8 einbringbar ist.

Eine vergrößerte Ansicht der Diagnose-Einheit 8 ist in Fig. 3b dargestellt. Die Diagnose-Einheit 8 umfasst ein mit einer Füllung, hier in Form einer Vergussmasse 17 gefülltes Gehäuse 16, in welches die erste 9 und zweite Elektrode 12 eingebracht sind. Das Gehäuse 16 wiederum umfasst ein Befestigungsmittel 18, welches zu dem Befestigungsmittel 15 des Halsrohrs 11 komplementär ist, und welches zur Befestigung der Diagnose-Einheit 8 an dem Halsrohr 11 dient. In anderen Ausgestaltungen kann die Diagnose-Einheit 8 auch an anderen Komponenten der Vorrichtung 1 befestigbar sein.

### Bezugszeichen

1 Thermometer
2 Behälter
2a Prozessanschluss
3 Schutzrohr
4 Messeinsatz
5 Anschlussleitungen
6 Temperatursensor
7 Elektronik
8 Diagnose-Einheit
9 Erste Elektrode
10 10a, 10b Anschlussleitungen
11 Halsrohr
12 Zweite Elektrode
13 Schutzelement
14 Anschluss
15 Befestigungsmittel des Anschlusses
16 Gehäuse
17 Vergussmasse
18 Befestigungsmittel der Diagnose-Einheit

M Medium
T Temperatur

## Patentansprüche

1. Vorrichtung (1) zur Bestimmung und/oder Überwachung einer Temperatur (T) eines, insbesondere elektrisch leitfähigen, Mediums (M) in einem Behältnis (2) umfassend
einen Messeinsatz (4) in welchem zumindest ein Temperatursensor (6) angeordnet ist, und
ein Schutzrohr (3), welches mit dem Medium (M) in Kontakt kommt und zur Aufnahme des Messeinsatzes (4) dient,
wobei die Vorrichtung (1) zumindest eine Diagnose-Einheit (8) umfasst, welche Diagnose-Einheit (8) zumindest eine erste Elektrode (9) aus einem ersten Material aufweist, welche erste Elektrode (9) sich zumindest teilweise in einem Innenvolumen (V) der Vorrichtung (1) befindet, und wobei eine galvanische Zelle durch die erste Elektrode und eines der Folgenden gebildet ist;
- eine zweite Elektrode (12), wobei die Diagnose-Einheit (8) zumindest die erste (9) und die zweite Elektrode (12) umfasst, wobei sich das erste Material für die erste Elektrode (9) und ein zweites Material für die zweite Elektrode (12) voneinander bezüglich ihrer elektrochemischen Eigenschaften unterscheiden,
- das Schutzrohr (3), wobei sich das erste Material von einem Material des Schutzrohrs (3) bezüglich seiner elektrochemischen Eigenschaften unterscheidet,
- ein Halsrohr (11), welches Halsrohr (11) zur Verbindung mit dem Schutzrohr (3) ausgebildet ist, wobei sich das erste Material von einem Material des Halsrohrs (11) bezüglich seiner elektrochemischen Eigenschaften, unterscheidet,
wobei die Vorrichtung (1) derart ausgebildet ist, dass im Falle, dass Medium in die Vorrichtung (1) eintritt, aufgrund einer Beschädigung des Schutzrohrs (3), es zu einer Spannung an der galvanischen Zelle kommt,
wobei das Vorhandensein Spannung an der galvanischen Zelle zur Diagnose der Vorrichtung hinsichtlich einer Beschädigung des Schutzrohrs dient,
wobei die Vorrichtung ein Befestigungsmittel (15) zum, insbesondere lösbaren, Befestigen der Diagnose-Einheit (8) umfasst.

2. Vorrichtung (1) nach Anspruch 1,
umfassend ein Halsrohr (11) zur Verbindung mit dem Schutzrohr (3).

3. Vorrichtung (1) nach Anspruch 1 oder 2,
wobei die Diagnose-Einheit (8), insbesondere die erste Elektrode (9), zumindest teilweise in einem Innenvolumen (V₁) des Schutzrohrs (3) anordenbar ist oder angeordnet ist.

4. Vorrichtung (1) nach Anspruch 3,
wobei die Diagnose-Einheit (8), insbesondere die erste Elektrode (9), in einem dem Medium (M) im eingebauten Zustand der Vorrichtung (1) zugewandten Endbereich (a) des Schutzrohrs (3) anordenbar ist oder angeordnet ist.

5. Vorrichtung (1) nach zumindest einem der vorherigen Ansprüche,
wobei die Diagnose-Einheit (8), insbesondere die erste Elektrode (9), zumindest teilweise in einem Innenvolumen (V₂) des Halsrohrs (11) anordenbar ist oder angeordnet ist.

6. Vorrichtung (1) nach zumindest einem der vorherigen Ansprüche,
wobei die Diagnose-Einheit (8), insbesondere die erste Elektrode (9), von einem elektrisch-nichtleitenden, wasserlöslichen Schutzelement (13), umgeben ist.

7. Vorrichtung (1) nach zumindest einem der vorherigen Ansprüche,
umfassend eine modulare Dichtungsvorrichtung für eine Installationsbaugruppe zur Aufnahme des Messeinsatzes (4).

8. Vorrichtung (1) nach Anspruch zumindest einem der vorherigen Ansprüche, wobei es sich bei dem Befestigungsmittel (15) um ein Mittel zur Herstellung einer Schraubverbindung, einer Klemmverbindung oder Schweißverbindung handelt.

9. Vorrichtung (1) nach zumindest einem der vorherigen Ansprüche,
wobei die Diagnose-Einheit (8) ein Gehäuse (16) umfasst, in welches die erste Elektrode (9) oder die erste Elektrode (9) und zweite Elektrode (12) zumindest teilweise angeordnet ist/sind,
wobei die erste Elektrode (9) oder die erste Elektrode (9) und zweite Elektrode (12) zumindest teilweise aus dem Gehäuse (16) herausragt /herausragen.

10. Vorrichtung (1) nach Anspruch 9,
wobei das Gehäuse (16) ein zu dem Befestigungsmittel (15) der Vorrichtung (1) komplementäres Befestigungsmittel (18) umfasst.

11. Vorrichtung (1) nach Anspruch 9 oder 10,
wobei das Gehäuse (16) der Diagnose-Einheit (8) zumindest teilweise mit einer Füllung (15), insbesondere einer Vergussmasse, gefüllt ist, in welche die erste Elektrode (9) oder die erste Elektrode (9) und zweite Elektrode (12) zumindest teilweise eingebracht ist/sind.

## Claims

1. A device (1) for determining and/or monitoring a temperature (T) of an, in particular electrically conductive, medium (M) in a container (2), comprising
a measuring insert (4) in which at least one temperature sensor (6) is arranged, and
a protective tube (3), which comes into contact with the medium (M) and is used to mount the measuring insert (4),
wherein the device (1) comprises at least one diagnostics unit (8), said diagnostics unit (8) having at least one first electrode (9) made from one first material, said first electrode (9) being at least partially located in an internal volume (V) of the device (1), and wherein a galvanic cell is formed by the first electrode and one of the following;
• a second electrode (12), wherein the diagnostics unit (8) comprises at least the first electrode (9) and the second electrode (12), wherein the first material for the first electrode (9) and a second material for the second electrode (12) differ from each other in terms of their electrochemical properties,
• the protective tube (3), wherein the first material differs from a material of the protective tube (3) in terms of its electrochemical properties,
• an extension tube (11), said extension tube (11) being configured to connect to the protective tube (3), wherein the first material differs from a material of the extension tube (11) in terms of its electrochemical properties,
wherein the device (1) is configured in such a way that, in the event that medium enters the device (1), there will be voltage at the galvanic cell as a result of damage to the protective tube (3),
wherein the presence
of voltage at the galvanic cell is used to perform diagnostics on the device in terms of damage to the protective tube,
wherein the device comprises a fixing (15) for attaching the diagnostics unit (8), in particular in such a way that it can be removed again.

2. The device (1) as claimed in claim 1,
comprising an extension tube (11) to connect to the protective tube (3).

3. The device (1) as claimed in claim 1 or 2,
wherein the diagnostics unit (8), in particular the first electrode (9), can be or is at least partially arranged in an internal volume (V1) of the protective tube (3).

4. The device (1) as claimed in claim 3,
wherein the diagnostics unit (8), in particular the first electrode (9), can be or is arranged in an end area (a) of the protective tube (3) facing toward the medium (M) when the device (1) is installed.

5. The device (1) as claimed in at least one of the preceding claims,
wherein the diagnostics unit (8), in particular the first electrode (9), can be or is at least partially arranged in an internal volume (V2) of the extension tube (11).

6. The device (1) as claimed in at least one of the preceding claims,
wherein the diagnostics unit (8), in particular the first electrode (9), is surrounded by a non-electrically conductive, water-soluble protective element (13).

7. The device (1) as claimed in at least one of the preceding claims,
comprising a modular sealing device for an installation assembly for mounting the measuring insert (4).

8. The device (1) as claimed in at least one of the preceding claims,
wherein the fixing (15) is a means of establishing a screw connection, a clamp connection or a welded joint.

9. The device (1) as claimed in at least one of the preceding claims,
wherein the diagnostics unit (8) comprises a housing (16) in which the first electrode (9) or the first electrode (9) and the second electrode (12) can be or is/are at least partially arranged, wherein the first electrode (9) or the first electrode (9) and the second electrode (12) at least partially protrude(s) from the housing (16).

10. The device (1) as claimed in claim 9,
wherein the housing (16) comprises a fixing (18) which complements the fixing (15) of the device (1).

11. The device (1) as claimed in claim 9 or 10,
wherein the housing (16) of the diagnostics unit (8) is at least partially filled with a filling (15), in particular a casting compound, into which the first electrode (9) or the first electrode (9) and the second electrode (12) is/are at least partially inserted.

## Revendications

1. Dispositif (1) destiné à la détermination et/ou à la surveillance d'une température (T) d'un produit (M) - lequel produit est notamment conducteur d'électricité - dans un réservoir (2)
lequel dispositif comprend
un insert de mesure (4) dans lequel est disposé au moins un capteur de température (6), et
un doigt de gant (3), lequel vient en contact avec le produit (M) et sert à recevoir l'insert de mesure (4),
le dispositif (1) comprenant au moins une unité de diagnostic (8), laquelle unité de diagnostic (8) présente au moins une première électrode (9) en un premier matériau, laquelle première électrode (9) se trouve au moins partiellement dans un volume intérieur (V) du dispositif (1), et une cellule galvanique étant formée par la première électrode et l'un des éléments suivants ;
- une deuxième électrode (12), l'unité de diagnostic (8) comprenant au moins la première électrode (9) et la deuxième électrode (12), le premier matériau pour la première électrode (9) et un deuxième matériau pour la deuxième électrode (12) étant différents l'un de l'autre en ce qui concerne leurs propriétés électrochimiques,
- le doigt de gant (3), le premier matériau étant différent d'un matériau du doigt de gant (3) en ce qui concerne ses propriétés électrochimiques,
- un tube d'extension (11), lequel tube d'extension (11) est formé pour être raccordé au doigt de gant (3), le premier matériau étant différent d'un matériau du tube d'extension (11) en ce qui concerne ses propriétés électrochimiques,
le dispositif (1) étant conçu de telle sorte que, dans le cas où du produit pénètre dans le dispositif (1) en raison d'un endommagement du doigt de gant (3), il se produit une tension aux bornes de la cellule galvanique,
la présence d'une tension aux bornes de la cellule galvanique servant à diagnostiquer le dispositif en ce qui concerne un endommagement du doigt de gant,
le dispositif comprenant un moyen de fixation (15) pour fixer, notamment de manière amovible, l'unité de diagnostic (8).

2. Dispositif (1) selon la revendication 1,
lequel dispositif comprend un tube d'extension (11) destiné à être relié au doigt de gant (3).

3. Dispositif (1) selon la revendication 1 ou 2,
pour lequel l'unité de diagnostic (8), notamment la première électrode (9), peut être disposée ou est disposée au moins partiellement dans un volume intérieur (V₁) du doigt de gant (3).

4. Dispositif (1) selon la revendication 3,
pour lequel l'unité de diagnostic (8), notamment la première électrode (9), peut être disposée ou est disposée dans une zone d'extrémité (a) du doigt de gant (3) orientée vers le produit (M) à l'état monté du dispositif (1).

5. Dispositif (1) selon au moins l'une des revendications précédentes,
pour lequel l'unité de diagnostic (8), notamment la première électrode (9), peut être disposée ou est disposée au moins partiellement dans un volume intérieur (V₂) du tube d'extension (11).

6. Dispositif (1) selon au moins l'une des revendications précédentes,
pour lequel l'unité de diagnostic (8), notamment la première électrode (9), est entourée d'un élément de protection (13) soluble dans l'eau et électriquement non conducteur.

7. Dispositif (1) selon au moins l'une des revendications précédentes,
lequel dispositif comprend un dispositif d'étanchéité modulaire pour un composant d'installation destiné à recevoir l'insert de mesure (4).

8. Dispositif (1) selon au moins l'une des revendications précédentes,
pour lequel le moyen de fixation (15) est un moyen de réalisation d'un assemblage par vissage, d'un assemblage par serrage ou d'un assemblage par soudage.

9. Dispositif (1) selon au moins l'une des revendications précédentes,
pour lequel l'unité de diagnostic (8) comprend un boîtier (16) dans lequel la première électrode (9) ou la première électrode (9) et la deuxième électrode (12) est/sont au moins partiellement disposée(s), la première électrode (9) ou la première électrode (9) et la deuxième électrode (12) dépassant au moins partiellement du boîtier (16).

10. Dispositif (1) selon la revendication 9,
pour lequel le boîtier (16) comprend un moyen de fixation (18) complémentaire du moyen de fixation (15) du dispositif (1).

11. Dispositif (1) selon la revendication 9 ou 10,
pour lequel le boîtier (16) de l'unité de diagnostic (8) est rempli au moins partiellement d'un remplissage (15), notamment d'un produit de surmoulage, dans lequel la première électrode (9) ou la première électrode (9) et la deuxième électrode (12) est/sont au moins partiellement insérée(s).
